# EUROPÄISCHE PATENTANMELDUNG

(11) **EP 3 315 219 A1**
(43) Veröffentlichungstag der Anmeldung: **02.05.2018**
(21) Anmeldenummer: 17197614.5
(22) Anmeldetag: 20.10.2017
(51) Int. Cl.: B08B 9/049, B08B 9/093, B08B 3/02, B08B 1/00, B08B 5/02, B08B 13/00, G05D 1/02, B25J 11/00

(54) **REINIGUNGSVORRICHTUNG FÜR OBERFLÄCHEN**

(30) Priorität: 28.10.2016 DE 102016120629; 27.04.2017 DE 102017109111
(71) Anmelder: Fraunhofer-Gesellschaft zur Förderung der angewandten Forschung e.V., 80686 München (DE)
(72) Erfinder: MAUERMANN, Marc, Dr., 01277 Dresden (DE); BOYE, André, 01156 Dresden (DE); MURCEK, Roman, 01159 Dresden (DE)
(74) Vertreter: Gottfried, Hans-Peter

(57) **Zusammenfassung**

Die Erfindung betrifft eine Reinigungsvorrichtung und ein Reinigungsverfahren für Oberflächen (22) in einem Anwendungsraum (20), umfassend wenigstens eine Löseeinrichtung (4) zum Aufbringen eines Reinigungsfluids (7) und/oder zum Ablösen von Anhaftungen von den Oberflächen (22) und wenigstens eine Einrichtung (12) zur Positionsbestimmung der Reinigungsvorrichtung (1) im Anwendungsraum (20). Erfindungsgemäß ist die Einrichtung (12) zur Positionsbestimmung in der Weise mit einer Steuerungseinrichtung (1), die eine Speichereinrichtung umfasst, und mit der wenigstens einen Löseeinrichtung (4) verbunden, so dass in der Speichereinrichtung der Steuerungseinrichtung gespeicherte Reinigungsparameter einer Position zuordenbar sind und durch die Steuerungseinrichtung an die Löseeinrichtung (4) übertragen und die Reinigungsparameter bei Erreichen der Position auf die Löseeinrichtung (4) angewendet werden.

## Beschreibung

Die Erfindung betrifft eine Reinigungsvorrichtung für wenigstens eine Oberfläche, nachfolgend als Oberflächen bezeichnet, in einem Anwendungsraum, insbesondere zum Einsatz innerhalb geschlossener industrieller Anlagen, umfassend wenigstens eine Löseeinrichtung zum Aufbringen eines Reinigungsmittels und/oder zum Ablösen von Anhaftungen von den Oberflächen sowie wenigstens eine Einrichtung zur Positionsbestimmung.

Reinigung ist in einer Vielzahl von Industriebereichen ein wichtiges Thema. Prozesssicherheit sowie Zeit- und Ressourceneffizienz gewinnen dabei zunehmend an Bedeutung. Ein besonderes Erfordernis für die regelmäßige Reinigung besteht zum Beispiel bei:
- Verarbeitungs- oder Verpackungsanlagen für Lebensmittel, Pharmazieprodukte oder Kosmetik;
- Abflussgitter in Produktionsanlagen;
- Kanalisationssystemen;
- Rohrleitungssystemen oder
- Tanks (liegend oder stehend).

Deren Innenraum mit seinen Oberflächen, insbesondere den produktberührten Flächen, stellt den Anwendungsraum im Sinne der Erfindung dar.

Um die erforderliche Sauberkeit zu gewährleiten, sind Technologien notwendig, die eine flexible und bedarfsgerechte Reinigung ermöglichen. Stand der Technik bei der Reinigung sind entweder manuelle Reinigung oder automatisierte CIP-(Cleaning in Place)-Systeme mit im Anwendungsraum fest installierten Reinigungsgeräten.

Manuelle Reinigung hat den Nachteil, dass sie aufgrund der Durchführung durch einen menschlichen Bediener sehr fehleranfällig und nicht reproduzierbar ist.

Bei CIP-Reinigungsverfahren wird definitionsgemäß die Anlage oder ein Teil davon gereinigt, ohne sie demontieren zu müssen. Durch exakte Definition von Reinigungsmitteln, Drücken, Temperaturen und Zeiten wird ein reproduzierbarer Prozess festgelegt. CIP-Reinigungssysteme haben zudem einen hohen Integrationsaufwand und ihre Reinigungsprogramme arbeiten zumeist mit festgelegten Abfolgen von Reinigungsflotten (z. B. hinsichtlich Zeit, Zusammensetzung der Reinigungsmittel) und Betriebsparametern (z. B. Temperatur, Betriebsdruck). Dadurch sind sie recht unflexibel und es mangelt an Ressourceneffizienz.

Die Druckschrift WO 2005/083541 A1 beschreibt einen piezoelektrischen Ablagerungssensor mit zugehöriger Signalverarbeitung. Durch diese Einrichtung wird ein damit ausgestattetes autonomes oder auch ein nicht-autonomes Reinigungsgerät in die Lage versetzt, den Reinigungsprozess auf den ermittelten Verschmutzungsgrad abzustimmen. Ein piezoelektrischer Ablagerungssensor ist vorteilhaft einsetzbar für die Erkennung von Ablagerungen, die eine bestimmte Stärke erreichen und darüber hinaus unmittelbar durch den Sensor berührbar sind. Daher ist ein Einsatz nur dann sinnvoll möglich, wenn diese Bedingungen gegeben sind.

Die Druckschrift US 6 026 538 A beschreibt ein Robotersystem für die Reinigung von Rohrleitungen, um dort Schmutz oder Staub zu entfernen. Die Fortbewegung erfolgt durch Rückstoß, erzeugt durch ausgestoßene Druckluft, wodurch zugleich anhaftender Staub von den Oberflächen gelöst wird. Dieser wird dann durch eine an die zu reinigende Rohrleitung angeschlossene Absaugeinrichtung abgezogen. Der abgesaugte Staub wird durch einen Schlauch nach außen in einen Sammelbehälter befördert. Das Robotersystem ist sehr einfach aufgebaut und daher nur begrenzt einsetzbar, insbesondere für einfache Rohrleitungssysteme.

Aus der Druckschrift US 2008 0 173 247 A1 ist ein mit einer autonomen Funktion ausgestattetes Reinigungsgerät bekannt, das Hundekot auf Wegen erkennt und selbsttätig entfernt. Die Erkennung erfolgt dabei auf eine gewisse Distanz durch Kameras und Infrarotsensoren, jedoch naturgemäß stets nur auf dem Untergrund. Weitere Sensoren dienen der Navigation.

Die Druckschrift DE 10 2004 042 786 A1 beschreibt eine Vorrichtung zur vollautomatischen Reinigung eines Wasserbeckens (Pool), bei der im hinteren Bereich des Roboters ein optisches System zur automatischen Schmutzerkennung eingebracht ist. Die Schmutzerkennung kann durch elektronische Bilderfassung des Untergrunds und anschließender Auswertung durch eine Erkennungssoftware stattfinden. Die Laufwalzen und die Einsaugöffnung sind auf der Unterseite des Roboters angebracht. Die Vorrichtung kann zwar selbsttätig einen Reinigungsvorgang durchführen, jedoch nur auf einer Fläche, der Ebene, auf der sie sich bewegt. Zudem ist die Anforderung an den Reinigungsvorgang überall auf dem ebenen Boden des Pools im Wesentlichen gleich, so dass keine Anforderungen an eine Anpassung an unterschiedliche Gegebenheiten gestellt werden.

Die Druckschrift US 2004 0 231 089 A1 hat einen Reinigungsroboter zum Gegenstand, der für die Reinigung von Industrieschornsteinen vorgesehen ist. Hierzu weist der Reinigungsroboter eine Einrichtung zur eigenen Bewegung und eine zentral angeordnete rotierende Bürste auf, die sich bei ihrer Rotation bis zum Durchmesser des zu reinigenden Rohrs aufweitet und dessen Oberfläche reinigt. Außerdem weist der Reinigungsroboter eine Saugeinrichtung sowie eine Sprühvorrichtung zur Anwendung von Reinigungsprodukten auf. Weiterhin sind Kameras, verbunden mit einer Steuerungseinrichtung, und eine Beleuchtungseinrichtung vorgesehen. Der Reinigungsroboter ist durch diese Ausstattung nur geeignet, in einem rotationssymmetrischen Rohr mit gleichmäßiger Wandung bei begrenztem Durchmesser im Bereich des maximal erreichbaren Bürstendurchmessers eingesetzt zu werden.

Die Druckschrift KR 100 190 751 B1 beschreibt einen elektrisch betriebenen Reinigungsroboter, der für den Einsatz in Kanälen einer Klimaanlage vorgesehen ist. Er weist Beobachtungskameras auf, die mit einem Monitor verbunden sind. Er bewegt sich auf Raupenketten vorwärts und ist mit rotierenden Bürsten ausgestattet. Die rotierenden Bürsten können nur solche Flächen reinigen, die sie unmittelbar erreichen. Zudem ist kein automatischer Betrieb möglich.

Von der Firma AWH ist zudem einen Tankreinigungswagen bekannt, bei dem eine einzelne Tankreinigungsdüse auf einem Gestell mit Rädern vorgesehen ist. Das Gestell kann beispielsweise durch liegende Tanks gezogen werden, um diese auf ihrer kompletten Länge reinigen zu können (https://www.awh.eu/produkte/reinigungstechnik/sensoren-und-zubehoer.html). Diese Lösung enthält jedoch keinerlei Sensorik zur Schmutzerkennung oder Steuerungsmöglichkeiten zur Anpassung von Betriebsparametern zur flexiblen und bedarfsgerechten Reinigung.

Die aus dem Stand der Technik bekannten Einrichtungen zur autonomen oder gesteuerten Reinigung von Oberflächen sind nicht geeignet, in einem Anwendungsraum mit komplizierter Struktur eingesetzt zu werden und dort alle Flächen effizient zu reinigen.

Aufgabe der Erfindung ist es daher, eine einfach aufgebaute Reinigungsvorrichtung für Oberflächen in einem Anwendungsraum anzubieten, die bei effizientem Verbrauch von Ressourcen, insbesondere Reinigungsmitteln, eine Reinigung mit hoher Sicherheit gewährleistet.

Die Aufgabe wird gelöst durch eine Reinigungsvorrichtung für Oberflächen in einem Anwendungsraum, wobei die Oberflächen unter, über und neben der Reinigungsvorrichtung gereinigt werden können und insbesondere ein Einsatz innerhalb geschlossener, schwer zugänglicher industrieller Anlagen vorgesehen ist. Die Reinigungsvorrichtung umfasst wenigstens eine Löseeinrichtung zum Aufbringen eines Reinigungsfluids und/oder zum Ablösen von Anhaftungen von den Oberflächen, wobei das Aufbringen des Reinigungsfluids und das Ablösen von Anhaftungen kombiniert sein können durch einen Reinigungsstrahl, wie nachfolgend näher ausgeführt.

Wenigstens eine Einrichtung zur Positionsbestimmung der Reinigungsvorrichtung im Anwendungsraum ist vorgesehen, die erfindungsgemäß mit einer Steuerungseinrichtung verbunden ist. Die Verbindung mit der Steuerungseinrichtung, die eine Speichereinrichtung umfasst und mit der wenigstens einen Löseeinrichtung verbunden ist, erfolgt in der Weise, dass in der Speichereinrichtung der Steuerungseinrichtung gespeicherte Reinigungsparameter einer Position zuordenbar sind. Weitere steuerungstechnische Möglichkeiten des Systems sind von der Erfindung umfasst. So ist es beispielsweise vorgesehen, aus den ermittelten Verschmutzungsdaten und der räumlichen Position die günstigen Reinigungsparameter eigenständig abzuleiten. Hierzu sind die jeweils geltenden Wirkzusammenhänge zwischen den aus dem System zu ermittelnden Parametern (z. B. Lage und Art der Verunreinigung) sowie den anzustrebenden Parametern (z. B. Reinigungsgrad), im System hinterlegt.

Die Reinigungsparameter werden bei einer bevorzugten Ausgestaltung der Erfindung durch die Steuerungseinrichtung an die Löseeinrichtung übertragen und die Reinigungsparameter bei Erreichen der jeweiligen Position auf die Löseeinrichtung angewendet. Dabei ist auch eine räumliche Trennung von Steuereinrichtung und/oder Speichereinrichtung von der Reinigungsvorrichtung einschließlich Signalübertragung zwischen der externen Steuereinrichtung und/oder Speichereinrichtung von der Erfindung umfasst.

Der Anwendungsraum im Sinne der Erfindung umfasst dabei jede Art und Form eines Raums, wobei auch nicht vollständig geschlossene Räume umfasst sind. Insbesondere sind hierbei Industrieanlagen umfasst, die ansonsten schwer für eine Reinigung zugänglich sind. Für deren innere Oberflächen, die häufig unregelmäßig gestaltet sind, Hinterschneidungen aufweisen oder durch die bestehende Distanz nicht unmittelbar mechanisch von der Position einer herkömmlichen Reinigungsvorrichtung aus erreichbar sind, ist die Reinigung durch die erfindungsgemäße Vorrichtung vorgesehen.

Zur Reinigung enthält die erfindungsgemäße Reinigungsvorrichtung verschiedene Düsensysteme und Reinigungsgeräte, welche einzeln (z. B. über Ventile) ansteuerbar sind. Mit diesen Düsen in Kombination mit selbstständiger Positionserkennung können je nach Anforderung in den verschiedenen Maschinenbereichen im Anwendungsraum unterschiedlich weit entfernte Flächen auf effiziente Art und Weise gereinigt werden. Es hat sich somit als vorteilhaft erwiesen, wenn die wenigstens eine Löseeinrichtung als eine Düsenanordnung ausgeführt ist, wobei alternativ oder ergänzend ein Einsatz von bevorzugt rotierenden Bürsten vorgesehen ist. Die Düsenanordnung appliziert das Reinigungsfluid, bevorzugt eine Flüssigkeit wie z. B. Wasser, auch ergänzt durch einen chemischen und/oder mechanischen Zusatz, der als ein Granulat ausgeführt sein kann und bevorzugt unter Druck auf einen Ort der Anhaftung unter Anwendung der vorgesehenen Reinigungsparameter zur Verwirklichung eines chemischen und/oder mechanischen Effekts. Das Reinigungsfluid kann auch gasförmig sein, wie z. B. Druckluft. Tritt ein Granulat hinzu, sind auch Verfahren Pulverstrahlen ausführbar.

Eine bevorzugte Ausführungsform der Düsenanordnung ist als eine oder mehrere statische Düsen, eine oder mehrerer rotierende Düsen und/oder als ein gesteuerter Zielstrahlreiniger, der eine oder mehrere in ihrer Ausrichtung ansteuerbare Düsen umfasst, ausgeführt. Die Düsen sind jeweils zusätzlich gesondert unter Anwendung der Reinigungsparameter ansteuerbar.

Als variierbare Reinigungsparameter sind Eigenschaften des Reinigungsfluids, die Art der Applikation und/oder die Richtung der Applikation des Reinigungsfluids vorgesehen. Als Art der Applikation kommen Parameter wie Druck, Temperatur und Dauer der Anwendung in Betracht, ebenso Intensität, Volumenstrom und/oder Eigenschaften eines Aerosols. Als veränderbare Eigenschaften des Reinigungsfluids sind beispielsweise die Art des Fluids, beispielsweise Wasser mit eine reinigenden Zusatz, oder ein gasförmiges Fluid vorgesehen. Das Reinigungsfluid kann fertig aufbereitet vorliegen oder im Zeitpunkt der Anwendung variabel mischbar sein. Der Anteil bzw. die Konzentration und auch die Art des Zusatzes sind in dem Fall ebenfalls steuerbar. Dazu werden das Reinigungsfluid und der Zusatz aus unterschiedlichen Tanks entnommen.

Zur vorteilhaften Positionsbestimmung sind
- gemäß einer ersten Ausführungsform eine manuell vorgegebene, in der Speichereinrichtung abgelegte Position, bezogen auf eine zurückgelegte Wegstrecke, ermittelt durch einen Wegstreckenmesser,
- gemäß einer zweiten Ausführungsform eine Detektion von lokalen Signalgebern wie z. B. RFID-Anwendungen oder Näherungssensoren im Anwendungsraum, die in einer besonders bevorzugten Ausführungsform auch codier- bzw. identifizierbar ausgeführt sind oder auf andere geeignete Weise eine Orientierung ermöglicht, wobei auch eine Kombination mit den anderen aus dem Stand der Technik bekannten Varianten der Orientierung vorgesehen ist, um zu einer Feinabstimmung bei der Ortbestimmung zu gelangen und/oder
- gemäß einer dritten Ausführungsform in der Speichereinrichtung abgelegte Raumform zum steuerungstechnischen Abgleich mit an der erreichten Position durch einen 3-D-Scanner gewonnenen Daten vorgesehen. Es können aber auch CAD-Daten, die von der Konstruktion der Anlage her vorliegen, genutzt werden.

Die in der Speichereinrichtung abgelegte Raumform wird bei einer besonders bevorzugten Ausgestaltung der Erfindung während zumindest einer initialen Bewegung der Reinigungsvorrichtung durch den Anwendungsraum gewonnen. Damit ist die Speichereinrichtung als ein selbstlernendes System oder als ein neuronales Netz ausgeführt, wobei Methoden und Algorithmen eingesetzt werden, die dazu dienen, ein optimiertes Reinigungsergebnis automatisiert zu erreichen. Vorteilhaft ist außerdem, dass dann regelmäßig eine aufwändige, vorbereitende Programmierung unterbleiben kann. Zudem ist die erfindungsgemäße Reinigungsvorrichtung dadurch einfach an neue Einsatzorte anpassbar.

Bei der Erfindung handelt es sich um eine mobile Reinigungsvorrichtung. Diese bewegt sich entweder selbstfahrend auf Rädern, auf dem Untergrund oder einer Schienenbahn über dem Untergrund, oder wird von einer Fördereinheit transportiert. So kann es beispielsweise auf einem vorhandenen Förderband, das als Fördereinheit dient, durch den Anwendungsraum, beispielsweise eine gesamte Produktionsanlage, transportiert werden und diese vollständig reinigen. Zur Bewegung der Reinigungsvorrichtung zu einem Einsatzort im Anwendungsraum und während des Reinigungsvorgangs sind daher vorteilhafter Weise ein mit der Reinigungsvorrichtung verbundenes Fahrwerk oder ein Adapter zur Verbindung mit einer insbesondere kontinuierlichen Fördereinrichtung im Anwendungsraum vorgesehen.

Weiterhin hat es sich als vorteilhaft erwiesen, wenn eine Einrichtung zur Erkennung von Anhaftungen vorgesehen und mit der Steuerungseinrichtung verbunden ist. Zudem ist es möglich, die Reinigungsvorrichtung mit einem optischen Sensor auszustatten, welcher die Umgebung nach verschmutzten Bereichen absucht. Bevorzugt beruht die Funktion dieses optischen Sensors auf einem Lumineszenzeffekt. Dabei wird beispielsweise ein Lichtspektrum ausgesandt, das bei der erwartbaren Verschmutzung (z. B. Bakterienbelag) einen einfach detektierbaren Lumineszenzeffekt hervorruft. Alternativ dazu ist es auch möglich, ein Mittel auf die zu prüfende Oberfläche aufzutragen, das bei der vorgesehenen Beleuchtung in Zusammenwirken mit der zu entfernenden Verschmutzung einen Lumineszenzeffekt hervorruft. Als vorteilhaft hat sich auch die Verarbeitung von Aufnahmen bei unterschiedlichen Lichtspektren erwiesen. Auf diese Weise können bedarfsgerecht nur die Bereiche gereinigt werden, welche auch verschmutzt sind. Zudem kann der Reinigungsverlauf überwacht und der Reinigungserfolg kontrolliert werden.

Besonders günstig ist es deshalb, wenn die Einrichtung zur Erkennung von Anhaftungen als ein optischer Detektor unter Nutzung eines Lumineszenzeffekts der Anhaftung durch von der Reinigungsvorrichtung oder in dem Anwendungsraum emittierte Lichtstrahlung ausgeführt ist. Die Wellenlänge kann beispielsweise außerhalb des sichtbaren Spektrums liegen und zumindest teilweise das UV- oder das IR-Spektrum umfassen.

Die Einrichtung zur Erkennung von Anhaftungen ist bei einer alternativen Ausführungsform in der Weise ausgestaltet, dass NIR- oder MIR-Spektroskopie im Reflexionsverfahren ausführbar ist.

Bei jeder der Ausführungsformen ist die durch die Beleuchtungseinrichtung emittierte Wellenlänge mit der Art der Anhaftung insoweit abgestimmt, dass ein Lumineszenzeffekt der Anhaftung genutzt wird. Beispielsweise können bestimmte bakterielle Beläge unter UV-Licht einen Lumineszenzeffekt aufweisen und sind dadurch mit einem von der Erfindung vorgesehenen optischen Detektor gut erkennbar. Vor allem ist das gewonnene Bild gut auswertbar und das Ergebnis kann in einen Steuerungsablauf einfließen.

Eine bevorzugte Ausführungsform umfasst einen mit der Reinigungsvorrichtung verbundenen Tank, der das Reinigungsfluid enthält. Dabei ist die Verbindung zwischen Reinigungsvorrichtung und Tank als ein Versorgungsschlauch zur Zuführung des Reinigungsfluids von außerhalb des Anwendungsraums vorgesehen. Alternativ hierzu oder auch zusätzlich, beispielsweise nur für einen Reinigungszusatz, ist ein mit der Reinigungsvorrichtung mechanisch verbundener und mitgeführter Tank vorgesehen.

Eine vorteilhafte Ausführungsform der vorliegenden Erfindung stellt eine Absaugeinrichtung und eine mit dieser verbundene Sammeleinrichtung für mit den Anhaftungen kontaminiertes Reinigungsfluid dar. Bevorzugt ist die Sammeleinrichtung außerhalb des Anwendungsraums angeordnet und über einen Versorgungsschlauch mit der Absaugeinrichtung verbunden. Alternativ hierzu ist die Sammeleinrichtung mechanisch mit der Absaugeinrichtung verbunden und wird mitgeführt.

Ein weiterer Aspekt der Erfindung betrifft ein Verfahren zur Reinigung von Oberflächen unter Einsatz einer Reinigungsvorrichtung, wie sie zuvor beschrieben wurde. Dabei wird die Position der Reinigungsvorrichtung in einem Anwendungsraum bestimmt und eine Steuereinrichtung überträgt in Abhängigkeit von der Position Reinigungsparameter an eine Löseeinrichtung zum Aufbringen eines Reinigungsmittels, insbesondere des zuvor beschriebenen Reinigungsfluids, und zum Ablösen von Anhaftungen von den Oberflächen.

Nach einer Ausgestaltung des erfindungsgemäßen Verfahrens ist eine Erkennung von Anhaftungen mittels optischer Detektion unter Nutzung eines Lumineszenzeffekts ausgeführt. Das Ergebnis der optischen Detektion wird in der Steuereinrichtung ausgewertet und in einer Modifikation der Reinigungsparameter umgesetzt, beispielsweise durch Wiederholung des Reinigungsvorgangs. Dabei ist ergänzend ein selbstlernendes System vorgesehen, das eine dauerhafte Modifikation des Reinigungsvorgangs vorsieht, wenn immer wieder eine unzureichende Reinigung durch die zunächst angewendeten Reinigungsparameter festgestellt wird.

Das erfindungsgemäße Verfahren sieht zur Positionsbestimmung gemäß einer ersten Ausgestaltung eine manuell vorgegebene, in einer Speichereinrichtung abgelegte Position, bezogen auf eine zurückgelegte Wegstrecke, vor. Gemäß einer zweiten Ausführungsform sind eine Detektion von im Anwendungsraum angeordneten Signalgebern und/oder gemäß einer dritten Ausführungsform eine in der Speichereinrichtung abgelegte Raumform zum steuerungstechnischen Abgleich mit an der erreichten Position durch einen 3-D-Scanner gewonnenen Daten vorgesehen. Die in der Speichereinrichtung abgelegte Raumform wird bevorzugt während zumindest einer initialen Bewegung der Reinigungsvorrichtung durch den Anwendungsraum gewonnen. Auch Programmierung oder die Verwendung und Einspeisung bereits vorliegender 3-D-Daten ist ebenfalls vorgesehen.

Ein weiterer Aspekt der vorliegenden Erfindung betrifft eine Verwendung einer Reinigungsvorrichtung wie sie zuvor beschrieben wurde. Die Reinigungsvorrichtung wird dabei insbesondere in einer im Wesentlichen geschlossenen Anlage eingesetzt und über eine aktuelle Position der Reinigungsvorrichtung wird ein Anlagenteil erkannt, in dem sich die Reinigungsvorrichtung befindet. Ein für den Anlagenteil vorgesehenes Reinigungsprogramm, umfassend Reinigungsparameter wie oben näher beschrieben, aus einer Speichereinrichtung abgerufen und die Reinigungsparameter angewendet werden.

Die Reinigungsvorrichtung wird in einer bevorzugten Ausführungsform mittels einer wiederaufladbaren Batterie betrieben sowie funkgesteuert, so dass keine materiellen elektronischen Schnittstellen bestehen. Lediglich für die Fluidzufuhr ist die Anbindung an einen Versorgungsschlauch notwendig, sofern kein Tank mitgeführt wird. Der Versorgungsschlauch ist vorzugsweise an eine automatisierte Schlauchtrommel angebunden. Die automatische Auf- und Abrollung des Versorgungschlauchs erfolgt dann synchronisiert zur Bewegung der Reinigungsvorrichtung. Alternativ hierzu ist aber auch eine komplett autarke Lösungsvariante mit einem oder mehreren Fluidreservoirs direkt am oder in der Reinigungsvorrichtung vorgesehen.

Eine weitere Alternative ist so ausgestaltet, dass der Antrieb pneumatisch oder hydraulisch, z. B. mittels Druckluft, erfolgt. Diese Ausführungsform entfaltet ihre Vorteile beispielsweise in Bereichen, in denen elektrische Spannungen unerwünscht sind, wie in explosionsgefährdeten Bereichen, oder wenn ohnehin Druckluft für andere Zwecke zugeführt wird und durch die Verwendung zum Antrieb auf die Zuführung eines weiteren Mediums verzichtet werden kann.

Zusammen mit einer fahrbaren Transportstation, an der auch die Akkus der Reinigungsvorrichtung aufgeladen werden können, können das Gerät und die Schlauchtrommel leicht als kompakte Einheit zu den verschiedenen Einsatzbereichen gefahren und dort angeschlossen werden, so dass ein einziges Gerät auch zur Reinigung mehrerer Anlagen verwendet werden kann.

Vorteile der erfindungsgemäßen Vorrichtung sind insbesondere die höhere Prozesssicherheit, die den wichtigsten Vorteil darstellt. Dies wird möglich aufgrund der Überwachung des Reinigungsvorgangs und die Reinigungskontrolle durch das optische System sowie aufgrund der Bewegung des Reinigungssystems. Diese Bewegung führt zu einer besonders vorteilhaften Minimierung von Spritzschatten, so dass alle Bereiche im Anwendungsraum sicher erreicht und gereinigt werden. Vorteile liegen außerdem in der Automatisierung des Prozesses (Reproduzierbarkeit) und der verbesserten Erreichbarkeit schwer zugänglicher Bereiche. Weitere Vorteile sind zudem das Potenzial zur Ressourceneinsparung und der geringe Aufwand zur Integration des Systems, zumal ein Gerät für mehrere Anlagen verwendet werden kann.

Anhand der Beschreibung eines Ausführungsbeispiels und ihrer Darstellung in der zugehörigen Zeichnung wird die Erfindung nachfolgend näher erläutert.

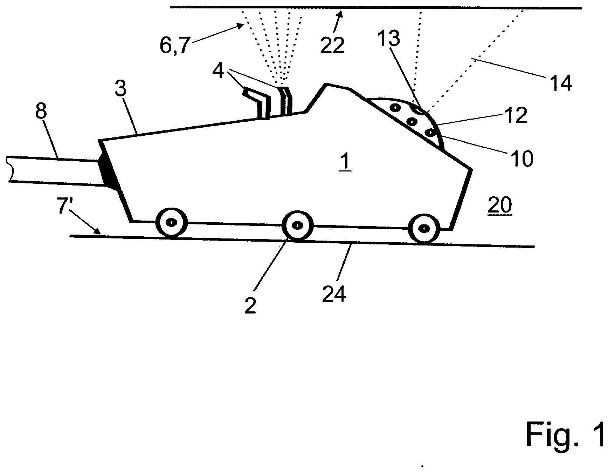

Fig. 1 zeigt eine schematische Darstellung einer Ausführungsform einer erfindungsgemäßen Reinigungsvorrichtung 1. Die Fortbewegung der Reinigungsvorrichtung 1 erfolgt durch angetriebene Räder 2, die an einem Gehäuse 3 angeordnet sind und als Fahrwerk zur selbstständigen Fortbewegung dienen. Die Räder 2 laufen auf einer Schienenbahn 24, wobei die Reibpaarung zwischen Schienenbahn 24 und Rädern 2 so gewählt ist, dass eine in Wesentlichen schlupffreie Fortbewegung ermöglicht wird. Dadurch ist es auch möglich, einen Wegstreckenmesser zur Bestimmung bzw. Verifizierung der aktuellen Position einzusetzen, wobei sich hierzu ein nicht angetriebenes Rad am besten eignet.

Die Hauptfunktion der Reinigungsvorrichtung 1 besteht in der Reinigung von Oberflächen 22 in einem Anwendungsraum 20 durch Aufbringen eines Reinigungsfluids 7 und/oder durch Ablösen von Anhaftungen. Hierzu sind Düsen 4 vorgesehen, deren Wirkung nach allen Richtungen, an denen eine Reinigung erforderlich ist, vorgesehen ist. Dies wird in der schematischen Darstellung durch einen Reinigungsstrahl 6 verdeutlicht, der bis an die Oberfläche 22 reicht. Das dabei abgegebene Reinigungsfluid 7 wird unter Druck auf die Oberfläche 22 aufgebracht, so dass Anhaftungen mechanisch abgelöst werden. Eine Vorbehandlung, insbesondere unter Verwendung eines chemischen und/oder mechanischen Zusatzes, ist zum Aufweichen der Anhaftungen, ggf. bis hin zum vollständigen Auflösen, vorgesehen. Das Reinigungsfluid 7 wird in der dargestellten Ausführungsform von außen über einen Versorgungsschlauch 8 zugeführt, der außerhalb des Anwendungsraums 20 bevorzugt von einer Schlauchtrommel abgerollt wird. Parallel zum Versorgungsschlauch 8 können auch elektrische Leitungen zur Energieversorgung und zur Übertragung von Informationen zu der erfindungsgemäßen Reinigungsvorrichtung 1 hingeführt werden.

Zur Bestimmung der Position der Reinigungsvorrichtung 1 in dem Anwendungsraum 20 kommt bei der dargestellten Ausführungsform ein 3-D-Scanner 12 zum Einsatz, der die lokale dreidimensionale Struktur des Anwendungsraums 20 erkennt und diese Information einer Steuerungseinrichtung zuführt. Dort werden die hinzugewonnenen Informationen mit zuvor gespeicherten Informationen von der bekannten inneren Struktur des Anwendungsraums 20 abgeglichen und hieraus eine aktuelle Position ermittelt. Weitere Informationen, wie die von dem Wegstreckenmesser gewonnenen, können hinzugezogen werden.

Ein optischer Detektor 13 ist vorgesehen, um Anlagerungen an der Oberfläche 22 in einem Beobachtungsbereich 14 zu erkennen, die gewonnene Information an die Steuerungseinrichtung weiterzuleiten und hierdurch eine Anpassung der Reinigungsparameter zu erreichen. Da in einem geschlossenen Anwendungsraum 20 kein Umgebungslicht verfügbar ist, ist eine Beleuchtung 10 vorgesehen, die den Beobachtungsbereich 14 ausleuchtet. Die Ausleuchtung kann dabei nacheinander oder gleichzeitig in unterschiedlichen Spektren bzw. Wellenlängen erfolgen, um die dabei gewonnen unterschiedlichen Bilder auswerten zu können. Im Ergebnis sind genauere Informationen über die Art der Anlagerungen zu erlangen, da diese unterschiedliche Eigenschaften hinsichtlich Absorption und Reflexion verschiedener Wellenlängen von Licht aufweisen. Dadurch können wiederum eine Anpassung und Optimierung der Reinigungsparameter und eine sichere und effiziente Reinigung des Anwendungsraums 20 erfolgen. Die Optimierung kann dabei sowohl für den aktuellen Reinigungszyklus erfolgen, als auch im Sinne eines selbstlernenden Systems für die generelle Optimierung späterer Reinigungszyklen genutzt werden.

Die dargestellte Ausführungsform ist besonders gut geeignet für enge Anwendungsräume 20, da sie nur mit einem Minimum an Zusatzaggregaten ausgestattet ist und deshalb eine geringe Größe aufweist. Steht mehr Raum zur Verfügung, kann beispielsweise ein Tank für das Reinigungsfluid 7 mitgeführt werden, so dass auf den Versorgungsschlauch 8 verzichtet werden kann. Auch die Energieversorgung erfolgt dann über Batterien. Zusätzlich können ein Tank für beispielsweise am Boden angesammeltes kontaminiertes Reinigungsfluid 7' und eine Absaugeinrichtung hierfür vorgesehen werden.

### Bezugszeichenliste

- 1: Reinigungsvorrichtung
- 2: Rad, Fahrwerk
- 3: Gehäuse
- 4: Düse, Düsenanordnung, Löseeinrichtung
- 6: Reinigungsstrahl
- 7: Reinigungsfluid
- 7': Reinigungsfluid kontaminiert
- 8: Versorgungsschlauch
- 10: Beleuchtungseinrichtung
- 12: 3-D-Scanner, Einrichtung zur Positionsbestimmung
- 13: optischer Detektor, Einrichtung zur Erkennung von Anhaftungen
- 14: Beobachtungsbereich
- 20: Anwendungsraum
- 22: Oberfläche
- 24: Schienenbahn

## Patentansprüche

1. Reinigungsvorrichtung für wenigstens eine Oberfläche (22) in einem Anwendungsraum (20), umfassend wenigstens eine Löseeinrichtung (4) zum Aufbringen eines Reinigungsfluids (7) und/oder zum Ablösen von Anhaftungen von der wenigstens einen Oberfläche (22) und wenigstens eine Einrichtung (12) zur Positionsbestimmung der Reinigungsvorrichtung (1) im Anwendungsraum (20), **dadurch gekennzeichnet, dass** die wenigstens eine Einrichtung (12) zur Positionsbestimmung in der Weise mit einer Steuerungseinrichtung (1), die eine Speichereinrichtung umfasst, und mit der wenigstens einen Löseeinrichtung (4) verbunden ist, so dass in der Speichereinrichtung der Steuerungseinrichtung gespeicherte Reinigungsparameter einer Position zuordenbar sind und durch die Steuerungseinrichtung an die Löseeinrichtung (4) übertragen und die Reinigungsparameter bei Erreichen der Position auf die Löseeinrichtung (4) angewendet werden.

2. Reinigungsvorrichtung nach Anspruch 1, wobei die wenigstens eine Löseeinrichtung (4) als eine Düsenanordnung ausgeführt ist, die das Reinigungsfluid (7) auf einen Ort der Anhaftung unter Anwendung der Reinigungsparameter appliziert.

3. Reinigungsvorrichtung nach Anspruch 2, wobei die Düsenanordnung (4) als eine oder mehrere statische Düsen (4), eine oder mehrerer rotierende Düsen (4) und/oder als ein gesteuerter Zielstrahlreiniger, der eine oder mehrere in ihrer Ausrichtung ansteuerbare Düsen (4) umfasst, ausgeführt ist, wobei die Düsen (4) jeweils zusätzlich gesondert unter Anwendung der Reinigungsparameter ansteuerbar sind.

4. Reinigungsvorrichtung nach einem der vorherigen Ansprüche, wobei als Reinigungsparameter Eigenschaften des Reinigungsfluids (7), Art der Applikation und/oder Richtung der Applikation des Reinigungsfluids (7) vorgesehen sind.

5. Reinigungsvorrichtung nach einem der vorherigen Ansprüche, wobei zur Bewegung der Reinigungsvorrichtung (1) zu einem Einsatzort im Anwendungsraum (20) und während des Reinigungsvorgangs ein mit der Reinigungsvorrichtung (1) verbundenes Fahrwerk (2) oder ein Adapter zur Verbindung mit einer Fördereinrichtung im Anwendungsraum (20) vorgesehen sind.

6. Reinigungsvorrichtung nach einem der vorherigen Ansprüche, wobei eine Einrichtung (13) zur Erkennung von Anhaftungen vorgesehen und mit der Steuerungseinrichtung verbunden ist und wobei die Steuerungseinrichtung als ein selbstlernendes System zur Selbstoptimierung bei der Erkennung und der Behandlung von Anhaftungen ausgeführt ist.

7. Reinigungsvorrichtung nach Anspruch 6, wobei die Einrichtung zur Erkennung von Anhaftungen als ein optischer Detektor (13) unter Nutzung eines Lumineszenzeffekts der Anhaftung durch von der Reinigungsvorrichtung (1) oder in dem Anwendungsraum (20) durch eine Beleuchtungseinrichtung (10) emittierte Lichtstrahlung ausgeführt ist.

8. Reinigungsvorrichtung nach Anspruch 7, wobei die Beleuchtungseinrichtung (10) in der Weise ausgeführt ist, dass NIR- oder MIR-Spektroskopie im Reflexionsverfahren ausführbar ist.

9. Reinigungsvorrichtung nach einem der vorherigen Ansprüche, wobei die Verbindung zwischen Reinigungsvorrichtung (1) und Tank als ein Versorgungsschlauch (8) zur Zuführung des Reinigungsfluids (7) von außerhalb des Anwendungsraums (20) und/oder als ein mit der Reinigungsvorrichtung (1) mechanisch verbundener Tank, der zumindest das Reinigungsfluid (7) enthält, vorgesehen ist.

10. Reinigungsvorrichtung nach einem der vorherigen Ansprüche, wobei eine Absaugeinrichtung und eine Sammeleinrichtung für mit den Anhaftungen kontaminiertes Reinigungsfluid (7') vorgesehen sind, wobei die Sammeleinrichtung außerhalb des Anwendungsraums (20) angeordnet und über einen Versorgungsschlauch (8) mit der Absaugeinrichtung verbunden ist oder die Sammeleinrichtung mechanisch mit der Absaugeinrichtung in der Reinigungsvorrichtung (1) mitführbar verbunden ist.

11. Verfahren zur Reinigung von Oberflächen unter Einsatz einer Reinigungsvorrichtung (1) nach einem der Ansprüche 1 bis 11, **dadurch gekennzeichnet, dass** eine Position der Reinigungsvorrichtung (1) in einem Anwendungsraum (20) bestimmt wird und eine Steuereinrichtung in Abhängigkeit von der Position Reinigungsparameter an eine Löseeinrichtung (4) zum Aufbringen eines Reinigungsfluids (4) überträgt, das zum Ablösen von Anhaftungen von der wenigstens einen Oberfläche (22) geeignet ist.

12. Verfahren nach Anspruch 11, wobei eine Erkennung von Anhaftungen ausgeführt, das Ergebnis in der Steuereinrichtung ausgewertet und in einer Modifikation der Reinigungsparameter umgesetzt wird.

13. Verfahren nach Anspruch 12, wobei die Erkennung von Anhaftungen mittels optischer Detektion unter Nutzung eines Lumineszenzeffekts ausgeführt wird.

14. Verfahren nach Anspruch 12 oder 13, wobei die Steuerungseinrichtung selbstlernend ist und eine Selbstoptimierung bei der Erkennung und der Behandlung von Anhaftungen erreicht.

15. Verfahren nach einem der Ansprüche 11 bis 14, wobei zur Positionsbestimmung gemäß einer ersten Ausgestaltung eine manuell vorgegebene, in einer Speichereinrichtung abgelegte Position, bezogen auf eine zurückgelegte Wegstrecke, gemäß einer zweiten Ausführungsform eine Detektion von im Anwendungsraum (20) angeordneten Signalgebern und/oder gemäß einer dritten Ausführungsform eine in der Speichereinrichtung abgelegte Raumform zum steuerungstechnischen Abgleich mit an der erreichten Position durch einen 3-D-Scanner (12) gewonnenen Daten vorgesehen sind, wobei die in der Speichereinrichtung abgelegte Raumform externe Daten zur Grundlage hat oder während zumindest einer initialen Bewegung der Reinigungsvorrichtung (1) durch den Anwendungsraum (20) gewonnen wird.
